# EUROPÄISCHE PATENTANMELDUNG

(11) **EP 3 786 495 A1**
(43) Veröffentlichungstag der Anmeldung: **03.03.2021**
(21) Anmeldenummer: 19193952.9
(22) Anmeldetag: 27.08.2019
(51) Int. Cl.: F16J 15/26, F16J 15/00, F16J 15/3296

(54) **VERFAHREN UND VORRICHTUNG ZUR ZUSTANDSÜBERWACHUNG EINER DRUCKPACKUNG EINES KOLBENKOMPRESSORS**

(71) Anmelder: Burckhardt Compression AG, 8404 Winterthur (CH)
(72) Erfinder: Feistel, Norbert, 8548 Ellikon a.d. Thur Zürich (CH)
(74) Vertreter: Dr. Graf & Partner AG

(57) **Zusammenfassung**

Verfahren und Überwachungssystem zur Zustandsüberwachung eines Kolbenstangendichtsystems (12) eines Kolbenkompressors, wobei das Kolbenstangendichtsystem (12) zumindest zwei in einer Längsrichtung (L) nacheinander folgend angeordnete Kammerringe (12a) mit zumindest je einem darin angeordneten Dichtelement (12b) umfasst, wobei eine durch die Dichtelemente (12b) sowie die Kammerringe (12a) verlaufende Kolbenstange (16) in Längsrichtung (L) hin und her bewegt und durch die Dichtelemente (12b) abgedichtet wird, wobei das Kolbenstangendichtsystem (12) eine Eintrittsseite (E) und eine Austrittsseite (A) aufweist, zwischen welchen ein Differenzdruck auftritt, wobei der auftretende Differenzdruck eine statische Druckkomponente (Ds) und eine dynamische Druckkomponente (D_{D}) aufweist, und wobei sich ein Leckgas in den Kammerringen (12a) befindet, wobei in dem Kolbenstangendichtsystem (12) zumindest die dynamische Druckkomponente (D_{D}) des Leckgases gemessen wird, und wobei aus einer Veränderung der dynamischen Druckkomponente (D_{D}) in Funktion der Zeit eine Zustandsänderung zumindest eines der Dichtelemente (12b) bestimmt wird.

## Beschreibung

Die Erfindung betrifft ein Verfahren sowie eine Vorrichtung zur Zustandsüberwachung eines Kolbenstangendichtsystems eines Kolbenkompressors.

### Stand der Technik

Das Dokument DE202014102844U1 offenbart eine Kolbenstangenpackung für einen Kolbenkompressor. Solche Kolbenstangendichtsysteme werden beispielsweise verwendet, um den Kompressionsraum eines Kolbenkompressors gegenüber dem Umgebungsdruck abzudichten. Eine hin und her bewegliche Kolbenstange ist einerseits mit einem Antrieb und andererseits mit einem Kolben des Kolbenkompressors verbunden. Die Kolbenstange verläuft durch das Kolbenstangendichtsystem hindurch, sodass innerhalb des Kolbenstangendichtsystems der Druck zwischen dem Kompressionsraum und der Umgebung abgebaut wird. Um für das Kolbenstangendichtsystem eine hohe Dichtwirkung bzw. eine geringe Leckage zu erzielen umfasst eine derartige Druck Packung vorzugsweise reibende Dichtelemente, deren Dichtflächen an der Kolbenstange anliegen und deshalb einen Verschleiss erfahren. Derartige Kolbenstangendichtsysteme weisen den Nachteil auf, dass deren Leckage abhängig von der Laufzeit zunimmt. Betreiber von derartigen Kolbenkompressor fordern während einer langen Laufzeit von beispielsweise ununterbrochen zumindest 8000 Stunden einen sicheren Betrieb, ohne dass die Leckage in dem Kolbenstangendichtsystem einen unzulässig hohen Wert aufweist, bzw. ohne dass die Dichtelemente einen hohen Verschleiss, einen Bruch oder sogar eine elastisch plastische Deformation aufweisen.

### Darstellung der Erfindung

Aufgabe der Erfindung ist es ein Verfahren sowie eine Vorrichtung auszubilden, welche einen zuverlässigeren Betrieb eines Kolbenkompressors erlauben.

Diese Aufgabe wird gelöst mit einem Verfahren umfassend die Merkmale von Anspruch 1. Die Ansprüche 2 bis 9 betreffen weitere, vorteilhafte Verfahrensschritte. Die Aufgabe wird weiter gelöst mit einem Überwachungssystem aufweisend die Merkmale von Anspruch 10. Die Ansprüche 11 bis 12 betreffen weitere vorteilhafte ausgestaltet de Vorrichtungen.

Die Aufgabe wird insbesondere gelöst mit einem Verfahren zur Zustandsüberwachung eines Kolbenstangendichtsystems eines Kolbenkompressors, wobei das Kolbenstangendichtsystem zumindest zwei in einer Längsrichtung nacheinander folgend angeordnete Kammerringe mit zumindest je einem darin angeordneten Dichtelement umfasst, wobei eine durch die Dichtelemente sowie die Kammerringe verlaufende Kolbenstange in Längsrichtung hin und her bewegt und durch die Dichtelemente abgedichtet wird, wobei das Kolbenstangendichtsystem eine Eintrittsseite und eine Austrittsseite aufweist, zwischen welchen ein Differenzdruck auftritt, wobei der auftretende Differenzdruck eine statische Druckkomponente und eine dynamische Druckkomponente aufweist, und wobei sich ein Leckgas in den Kammerringen befindet, wobei in dem Kolbenstangendichtsystem zumindest die dynamische Druckkomponente des Leckgases gemessen wird, und wobei aus einer Veränderung der dynamischen Druckkomponente in Funktion der Zeit eine Zustandsänderung zumindest eines der Dichtelemente bestimmt wird.

Die Aufgabe wird zudem insbesondere gelöst mit einem Überwachungssystem zur Zustandsüberwachung eines Kolbenstangendichtsystems eines Kolbenkompressors, wobei das Kolbenstangendichtsystem zumindest zwei in einer Längsrichtung nacheinander folgend angeordnete Kammerring mit zumindest je einem darin angeordneten Dichtelement umfasst, wobei eine in Längsrichtung hin und her bewegliche Kolbenstange durch die Dichtelemente sowie die Kammerringe verläuft, wobei die Kolbenstange mit einem Kolben verbunden ist, wobei das Kolbenstangendichtsystem eine Eintrittsseite und eine Austrittsseite aufweist, und wobei bei zumindest einer der Kammerringe ein Drucksensor angeordnet ist zum Messen zumindest der dynamischen Druckkomponente eines sich in den Kammerringen befindlichen Leckgases, und wobei eine Speicher- und Auswertevorrichtung eine Vielzahl von gemessenen dynamischen Druckkomponenten speichert, und wobei die Auswertevorrichtung einer Veränderung der dynamischen Druckkomponente in Funktion der Zeit überwacht, und daraus eine Zustandsänderung zumindest eines der Dichtelemente ableitet.

Das erfindungsgemässe Verfahren zur Zustandsüberwachung des Kolbenstangendichtsystems eines Kolbenkompressors weist den Vorteil auf, dass der Zustand des Kolbenstangendichtsystems bzw. der Verschleiss der sich in dem Kolbenstangendichtsystem befindlichen Dichtelemente auf einfache, kostengünstige und sehr präzise Weise überwacht war ist. Die Überwachung kann beispielsweise in vorgegebenen Zeitabständen, beispielsweise alle paar Tage, und besonders bevorzugt kontinuierlich erfolgen, indem der Zustand der Dichtelemente beispielsweise mehrmals pro Minute oder mehrmals pro Tag überwacht wird. Bei einer vorgeschriebenen ununterbrochenen Laufzeit von beispielsweise mindestens 8000 Stunden bedeutet dies, dass das Kolbenstangendichtsystem während etwa eines Jahres kontinuierlich überwacht wird. Die erfindungsgemässe Zustandsüberwachung weist den Vorteil auf, dass ein Versagen eines Dichtelementes mit einer genügend grossen Vorlaufzeit erkannt werden kann, sodass das Überwachungssystem von einem Versagen der Dichtelemente warnen kann, und für die Planung einer Wartung des Kolbenstangendichtsystems genügend Zeit zur Verfügung steht. Die mit der erfindungsgemässen Zustandsüberwachung gewonnene Betriebssicherheit erlaubt es auch das Kolbenstangendichtsystem, falls erwünscht, wartungsfrei während einer Zeitdauer von mehr als 8000 Stunden zu betreiben. Andererseits können auch gravierende Versagen des Kolbenstangendichtsystems, beispielsweise ein Bruch oder eine elastisch-plastische Deformation eines Dichtelementes, eindeutig erkannt werden, und daher eine Wartung zeitlich geplant werden, und beispielsweise die Zeitdauer eines noch möglichen, zuverlässigen Betriebs berechnet werden.

Ein durch das Kolbenstangendichtsystem hindurch fliessendes Leckgas bewirkt den Druckabfall in dem Kolbenstangendichtsystem. Dieses Leckgas weist eine statische Druckkomponente und eine dynamische Druckkomponente auf. Erfindungsgemäss wird eine Veränderung der dynamischen Druckkomponente in Funktion der Zeit überwacht, wobei aus dieser Veränderung ein Rückschluss über die Zustandsänderung zumindest eines Dichtelementes gezogen werden kann, wobei diese Zustandsänderung üblicherweise aufgrund einer Veränderung der Dichtheit, beispielsweise durch Verschleiss, Bruch oder elastisch-plastische Deformation des Dichtelementes hervorgerufen wird.

### Kurze Beschreibung der Zeichnungen

Die zur Erläuterung der Ausführungsbeispiele verwendeten Zeichnungen zeigen:
- Fig. 1: einen schematisch vereinfachten Längsschnitt durch einen Kolbenverdichter;
- Fig. 2: einen Längsschnitt durch ein Kolbenstangendichtsystem;
- Fig. 3: einen Verlauf des Drucks am Eintritt des Kolbenstangendichtsystems in Funktion des Kurbelwinkels;
- Fig. 4: den Saugdruck sowie den dynamischen Druck in nacheinander folgend angeordneten Kammerringen mit neuen Dichtungsringen;
- Fig. 5: den Saugdruck sowie den dynamischen Druck in nacheinander folgend angeordneten Kammerringen mit Dichtungsringen, die teilweise einen Verschleiss aufweisen;
- Fig. 6: einen Längsschnitt durch ein weiteres Kolbenstangendichtsystem;
- Fig. 7: ein weiteres Beispiel einer Zustandsüberwachung eines Kolbenstangendichtsystems;
- Fig. 8: einen Verlauf eines dynamischen Drucks in Abhängigkeit des Kurbelwellenwinkels;
- Fig. 9: ein weiteres Beispiel einer Zustandsüberwachung eines Kolbenstangendichtsystems.

Grundsätzlich sind in den Zeichnungen gleiche Teile mit gleichen Bezugszeichen versehen.

### Wege zur Ausführung der Erfindung

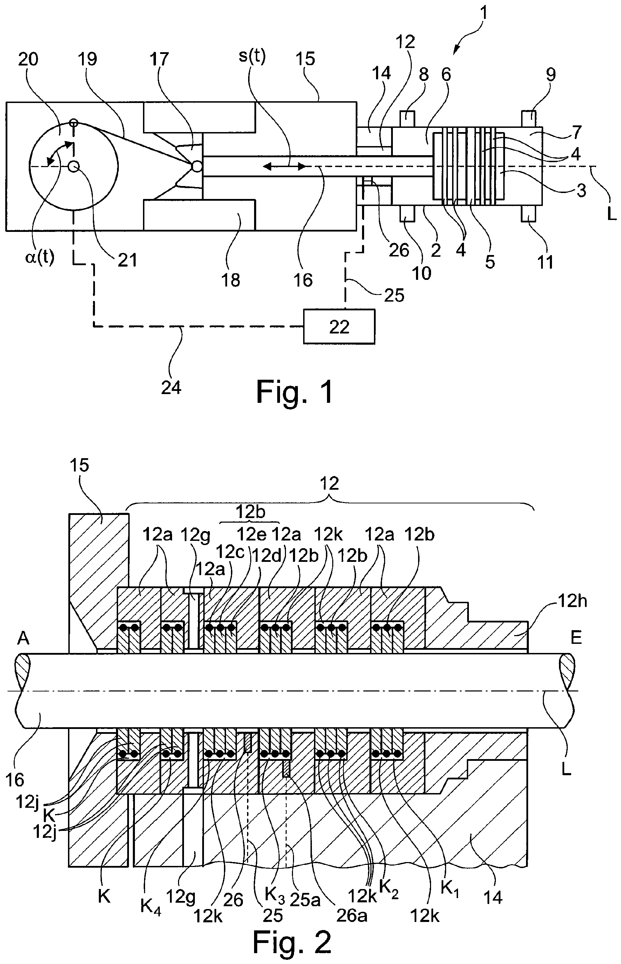

Figur 1 zeigt einen Kolbenverdichter 1 zum Verdichten eines Gases, umfassend einen in horizontaler Richtung verlaufenden Zylinder 2 sowie umfassend einen innerhalb des Zylinders 2 in Längsrichtung L bzw. in Verlaufsrichtung des Zylinders 2 beweglichen Kolben 3. Der Kolbenverdichter 1 umfasst zudem eine Kolbenstange 16, ein Kolbenstangendichtsystem 12, einen Kreuzkopf 17 mit einer Linearführung 18, eine Schubstange 19, eine Kurbel 20 sowie eine Antriebswelle 21. Der Kolben 3 ist im dargestellten Ausführungsbeispiel doppelwirkend ausgestaltet und umfasst Dichtungsringe 4 sowie einen Führungsring 5, wobei der Kolben 3 den Innenraum des Zylinders 2 in einen ersten Innenraum 6 sowie einen zweiten Innenraum 7 unterteilt, wobei diese beiden Innenräume je ein Eingangsventil 8, 9 sowie je ein Ausgangsventil 10, 11 aufweisen. Der Zylinder 2 ist über ein Zwischenstück 14 mit dem Gehäuse 15 verbunden, wobei in Zwischenstück zudem das Kolbenstangendichtsystem 12 angeordnet sind. In dem Kolbenstangendichtsystem 12 ist zumindest ein Sensor 26 angeordnet, um zumindest an einer Stelle einen Druck innerhalb des Kolbenstangendichtsystems 12 zu erfassen. Eine Überwachungsvorrichtung 22 erfasst über eine Signalleitung 24 und einen nicht im Detail dargestellten Sensor beispielsweise den Verschiebeweg s(t) des Kolbens 3 im Zylinder 7, den Verschiebeweg s(t) der Kolbenstange 16 oder einen Drehwinkel a(t) der Antriebswelle 21. Die Überwachungsvorrichtung 22 erfasst über die Signalleitung 25 zudem den Wert des Sensors 26 zum Messen des Drucks im Kolbenstangendichtsystem 12.

Figur 2 zeigt in einem Längsschnitt ein Kolbenstangendichtsystem 12 umfassend sechs Kammerringe 12a, wobei jeder Kammerring 12a einen Innenhohlraum, eine sogenannte Kammer K begrenzt. Das Kolbenstangendichtsystem 12 weist eine Eintrittsseite E auf, welche, wie aus Figur 1 ersichtlich, dem Innenraum 6 des Zylinders 2 zugewandt ist, und weist gegenüberliegend eine Austrittsseite A auf, bei welcher üblicherweise ein atmosphärischer Umgebungsdruck anliegt. Ausgehend von der Eintrittsseite E umfasst das Kolbenstangendichtsystem 12 in Längsrichtung L nacheinander folgend angeordnet sechs Kammerringe 12a, wobei die ersten vier Kammerringe 12a eine erste Kammer K1, eine zweite Kammer K2, eine dritte Kammer K3 und eine vierte Kammer K4 ausbilden, in welchen je ein Dichtelement 12b angeordnet, wobei jedes Dichtelement 12b einen Dichtungsring 12e, einen Stützring 12c sowie einen Deckring 12d umfasst. Zwischen der dritten und vierten Kammer K3, K4 ist ein Drucksensor 26 angeordnet, um den Druck des Leckgases in diesem Zwischenraum zu messen, wobei der Druck im Innenhohlraum der vierten Kammer K4 ebenfalls diesem Druck entspricht. In der dritten Kammer K3 ist zudem ein zweiter Drucksensor 26a angeordnet, um den Druck des Leckgases in dieser Kammer K3 zu messen. Die Drucksensoren 26, 26a sind über elektrische Leitungen 25, 25a mit der Ansteuerungsvorrichtung 22 verbunden. Nachfolgend dem vierten Kammerring 12a mit Kammer K4 ist links noch ein fünfter und sechster Kammerring 12a angeordnet, in deren Kammer K je zwei Sperrringe 12j angeordnet sind. Der fünfte Kammerring 12a umfasst zudem einen Leckgaskanal 12g, der in die Umgebung mit atmosphärischem Druck mündet. Die Kolbenstange 16 verläuft durch die Sperrringe 12j, die Dichtelemente 12b sowie die Kammerringe 12a. Das Kolbenstangendichtsystem 12 umfasst zudem ein Teilgehäuse 12h. Das Kolbenstangendichtsystem 12 ist im Zwischenstück 14 angeordnet und mit dem Antriebsgehäuse 15 verbunden. Die Dichtelemente 12b sind als Verschleiss behaftete Reibringe ausgestaltet, deren Dichtflächen an der Oberfläche der Kolbenstange 16 anliegt, um dadurch eine sehr niedrige Leckage zu erzielen. Damit die hohe Dichtwirkung der Dichtelemente 12b während des Betriebs während eines möglichst langen Zeitraums aufrecht erhalten bleibt ist sind die Dichtelemente 12b derart gestaltet, dass deren Dichtflächen trotz des fortschreitenden Verschleisses möglichst vollständig in Kontakt mit der Kolbenstange 16 verbleiben und so die Durchtrittsfläche für das Leckgas minimieren wird. Die Dichtelemente 12b weist somit eine Verschleisskompensation auf. Das Kolbenstangendichtsystem 12 gemäss Figur 2 umfasst eine Reihenschaltung von vier solchen gasdichten Dichtelementen 12b, wobei jedes Dichtelement 12b in einem separaten Kammerring 12a angeordnet ist.

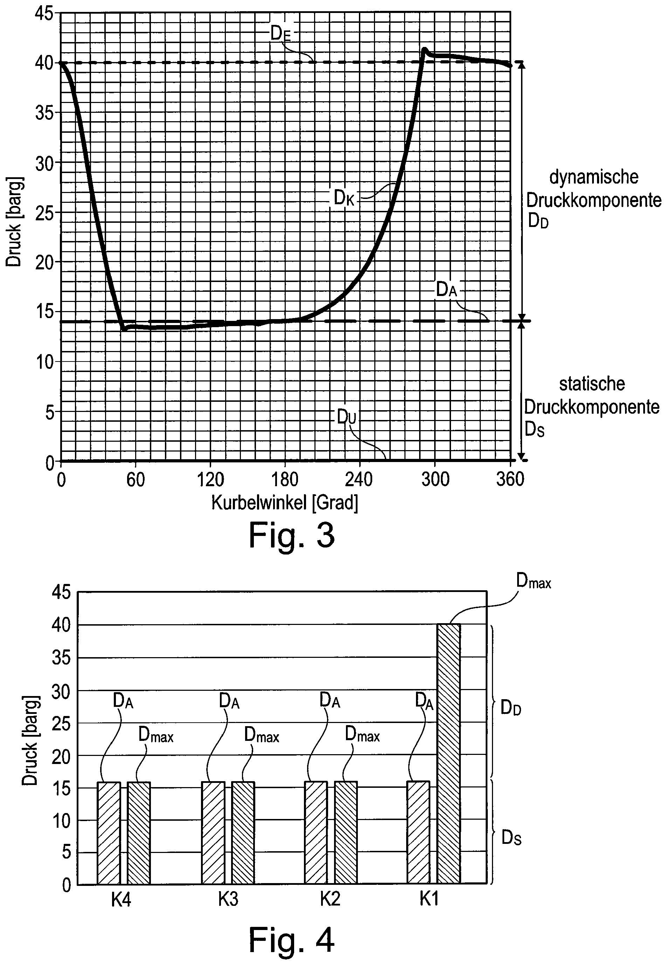

Figur 3 zeigt den während eines Betriebs des Kolbenkompressors 1 an der Eintrittsseite E des Kolbenstangendichtsystems 12 anliegenden Zylinderdruck D_{K} in Funktion des Kurbelwellenwinkels, wobei dieser Druckverlauf D_{K} durch das innerhalb des Zylinders 2 komprimierte Fluid verursacht wird. Ein zu förderndes Fluid wird vom Kolben 3 unter einem Saugdruck D_{A} angesogen und im Zylinder 2 auf einen Enddruck D_{E} komprimiert. Während dieses Ansaug- und anschliessenden Kompressionsvorgangs weist der Druck an der Eintrittsseite E des Kolbenstangendichtsystems 12 in Abhängigkeit des Kurbelwinkels α den Verlauf des Zylinderdrucks D_{K} auf. Die Austrittsseite A sowie der Leckgaskanal 12g weist den Druck einer nachfolgenden Kompressionsstufe oder im vorliegenden Beispiel einen Umgebungsdruck D_{U} von 0 bar auf. Der im Kolbenstangendichtsystem 12 auftretende Druck kann, wie in Figur 3 dargestellt, in eine statische Druckkomponente D_{S} und eine dynamische Druckkomponente D_{D} unterteilt werden. Die statische Druckkomponente D_{S} ist gleich dem Saugdruck D_{A}. Die dynamische Druckkomponente D_{D} ist die sich in Abhängigkeit der Zeit beziehungsweise in Abhängigkeit des Kurbelwinkels ändernde Druckkomponente, wobei die dynamische Druckkomponente D_{D} an der Eingangsseite E der Differenz zwischen dem am Kolbenstangendichtsystem 12 anliegenden Zylinderdruck D_{K} und dem Saugdruck D_{A} bzw. dem statischen Druck D_{S} entspricht. Die statische Druckkomponente D_{S} ist die Differenz zwischen dem Saugdruck D_{A} der betrachteten Verdichtungsstufe und dem an der Austrittsseite A anliegenden Druck D_{U}, wobei im vorliegenden Beispiel der Druck D_{U} dem atmosphärischen Druck entspricht, sodass die statische Druckkomponente dem Saugdruck D_{A} entspricht.

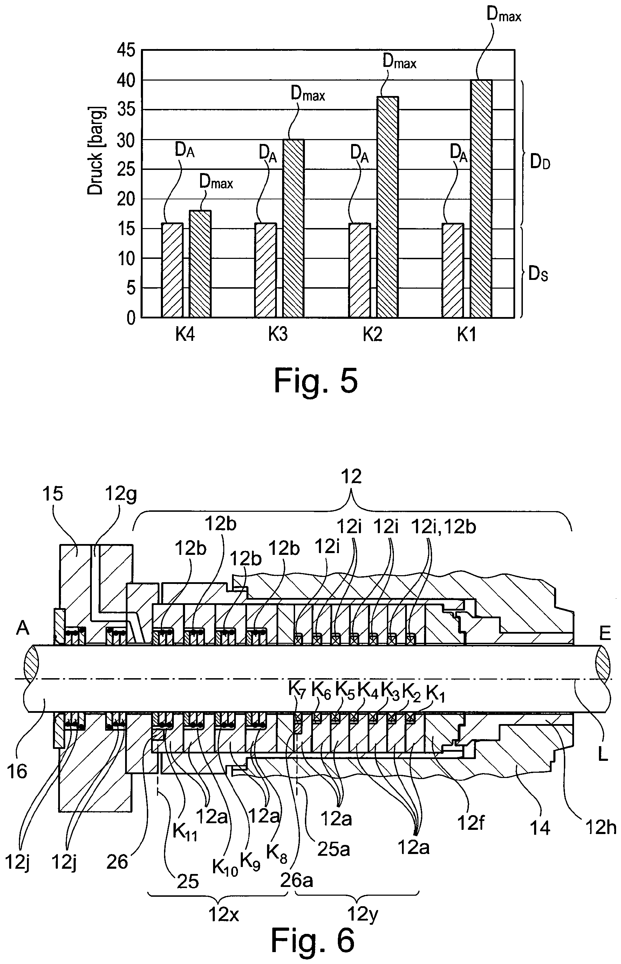

Figur 4 zeigt ein Beispiel zur Zustandsüberwachung des Kolbenstangendichtsystems 12 gemäss Figur 2. Der erste Kammerring 12a bildet die Kammer K1 aus, der zweite Kammerring 12a die Kammer K2, der dritte Kammerring 12a die Kammer K3 und der vierte Kammerring 12a die Kammer K4. Im vorliegenden Beispiel ist in jeder der vier Kammern ein Drucksensor 26, 26a angeordnet. Figur 4 zeigt für jeden der vier Kammern K1, K2, K3, K4 den in der jeweiligen Kammer anliegenden statischen Druck D_{A} und den auftretenden maximalen Druck D_{Max}, welcher sich aus der statischen Druckkomponente D_{S} und der dynamischen Druckkomponente D_{D} zusammensetzt. Die statische Druckkomponente D_{S} entspricht dem Saugdruck D_{A}. Der Verlauf des Drucks D_{K} ist grundsätzlich abhängig vom Kurbelwellenwinkel bzw. der Stellung des Kolbens in Funktion der Zeit. Der in der jeweiligen Kammer K1, K2, K3, K4 auftretende maximale Druck D_{Max}, beziehungsweise die Summe von statischer Druckkomponenten Ds und dynamischer Druckkomponente D_{D} ist hingegen abhängig von der Dichtwirkung bzw. vom Zustand bzw. dem Verschleiss der jeweiligen Dichtelemente 12b. Das Kolbenstangendichtsystem 12 weist im Neuzustand nur in der Kammer K1 einen hohen maximalen Druck D_{Max} auf, weil die gesamte dynamische Druckkomponente D_{D} am ersten reibenden Dichtelement 12b, welches sich in der Kammer K1 befindet, abgedichtet wird. Mit fortschreitender Betriebsdauer unterliegen die Dichtelemente 12b einem Verschleiss, was, wie in Figur 5 dargestellt, zur Folge hat, dass der maximale Druck D_{Max} ausgehend von der Eintrittsseite E in weitere Innenräume K2, K3, K4 von Kammerringen 12a eindringen kann, sodass in den einzelnen Kammern K1 bis K4 beispielsweise die in Figur 5 dargestellten maximalen Drücke D_{Max} gemessen werden. Der Zustand des Kolbenstangendichtsystems 12 kann nun beispielsweise auf die nachfolgenden Weisen überwacht werden:
A) Der Druck des Leckgases wird in einer einzigen Kammer gemessen, nämlich in der von der Eintrittsseite E am weitesten entfernen Kammer K4. Solang der darin gemessene Druck im Wesentlichen dem Saugdruck D_{A} entspricht kann daraus geschlossen werden, dass zumindest das Dichtelement 12b in der Kammer K3 seine Dichtwirkung vollkommen erfüllt, sodass in der Kammer K4 kein erhöhter Druck gemessen wird. Daraus kann geschlossen werden, dass die dynamische Druckkomponente D_{D} von einem der sich in den Kammern K2, K3 oder K4 befindlichen Dichtelemente 12d vollständig abgedichtet wird. Im Ausführungsbeispiel gemäss Figur 5 wird in der Kammer K4 ein erhöhter maximaler Druck D_{Max} gemessen, woraus geschlossen werden kann, dass alle in den Kammern K1, K2 und K3 angeordneten Dichtelemente 12b auf Grund ihres Verschleisses nicht mehr in der Lage sind eine vollständige Dichtwirkung zu erzielen.
B) Der Druck des Leckgases wird in jeder der Kammern K1, K2, K3 und K4 gemessen, sodass nebst dem Wert der maximalen Druckamplitude D_{Max} in jede Kammer zudem noch ein gegenseitiger Vergleich der dynamischen Druckkomponenten D_{D} der einzelnen Kammern K1 bis K4 möglich ist, bzw. die Verteilung des Drucks in den einzelnen Kammern. Der in Figur 5 dargestellten Verteilung ist zu entnehmen, dass die Dichtelemente 12b in den Kammern K1, K2 und K3 auf Grund des gemessenen, erhöhten maximalen Drucks D_{Max} bereits einen erheblichen Verschleiss aufweisen, und dass die dynamische Druckkomponente D_{D} im Wesentlichen nur noch von dem in der Kammer K4 angeordneten Dichtelement 12b abgedichtet wird.
C) Besonders aufschlussreich sind die in Figur 5 dargestellten Messergebnisse, wenn diese während einer längeren Zeitspanne, zum Beispiel einem Monat oder einem Jahr täglich gemessen und die Messergebnisse abgespeichert werden, und wenn die im Verlaufe der Zeit auftretende Veränderung der Messergebnisse analysiert wird. Mit zunehmender Betriebsdauer des Kolbenstangendichtsystems 12 wird sich der in den einzelnen Kammern K1, K2, K3 und K4 gemessene maximale Druck D_{Max} bzw. die dynamische Druckkomponente D_{D}, ausgehend von der Kammer K1, in Richtung zur Austrittsseite A hin erhöhen, sodass aus den in Figur 5 dargestellten Messergebnissen ersichtlich ist, welche Dichtelemente 12b und in welchem Masse diese noch zur Abdichtung beitragen bzw. wieweit diese bereits verschliessen sind. Oder, mit anderen Worten ausgedrückt, dringt der maximale Druck D_{Max} mit zunehmender Betriebsdauer ausgehend von der Kammer K1 immer tiefer in das Kolbenstangendichtsystem 12 beziehungsweise in die nachfolgenden Kammern K2, K3 und K4 ein, sodass über diese Veränderung der dynamischen Druckkomponenten D_{D} in Funktion der Zeit eine Zustandsänderung der Dichtelemente 12b bestimmbar ist. Der Zustand des Kolbenstangendichtsystems 12 und insbesondere der Zustand bzw. der Verschleiss der Dichtelemente 12b ist somit sehr genau bestimmbar bzw. beobachtbar, sodass beispielsweise festgestellt werden kann, ob das Kolbenstangendichtsystem 12 noch zuverlässig abdichtet, oder es kann extrapoliert werden wie lange das Kolbenstangendichtsystem 12 voraussichtlich noch zuverlässig abdichtet, oder es kann abgeschätzt werden, bis welche Dichtelemente 12b und bis zu welchem Zeitpunkt diese ersetzt bzw. gewartet werden sollten.

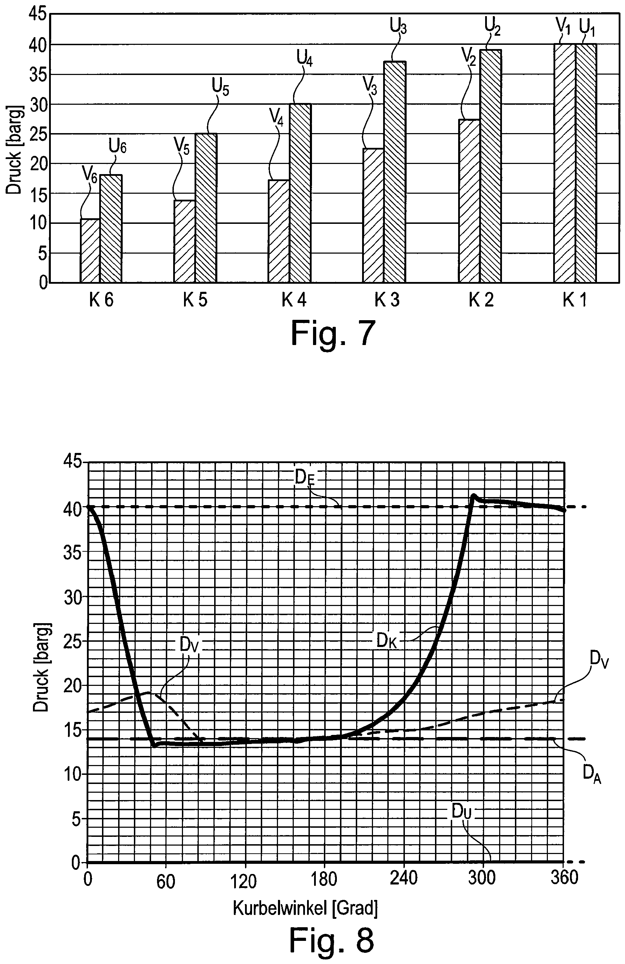

Figur 7 zeigt ein weiteres Beispiel einer Zustandsüberwachung eines Kolbenstangendichtsystems 12. Die in Figur 7 dargestellten Messwerte des maximalen Drucks D_{Max} der Kammern K1 bis K6 wurden an einem Kolbenstangendichtsystem 12 gemessen, das, in Unterschied zu dem in Figur 2 dargestellten Kolbenstangendichtsystem, sechs in Längsrichtung L nacheinander folgende Kammer K1 bis K6 aufweist, mit je einem darin angeordneten Dichtelement 12b, wobei die Dichtelemente 12b, in Unterschied zum Ausführungsbeispiel gemäss Figur 2, die Kolbenstange 16 nicht oder nur leicht berühren, sodass zwischen der Stirnseite der Dichtelemente 12b und der Kolbenstange 16 zumindest teilweise ein Spalt besteht. Bei einer solchen Reihenschaltung von reibungsfreien Dichtelementen 12b wird die Druckdifferenz in unterschiedlichen Beträgen auf alle Kammern K1 bis K6 verteilt. Das erfindungsgemässe Verfahren ist auch zur Zustandsüberwachung eines derartigen Kolbenstangendichtsystems 12 geeignet. Figur 7 zeigt mit den Werten U1 bis U6 den in der jeweiligen Kammer K1 bis K6 anliegenden maximalen Drucks D_{Max} bei einem Kolbenstangendichtsystem 12 im Neuzustand. Figur 7 zeigt mit den Werten V1 bis V6 den nach einer gewissen Betriebsdauer, zum Beispiel nach 2000 Betriebsstunden in der jeweiligen Kammer K1 bis K6 anliegenden maximalen Drucks D_{Max}. Die während dieser Betriebsdauer aufgetretene Veränderung der dynamischen Druckkomponente D_{D} bzw. die aufgetretene Zustandsänderung jedes des sich in der jeweiligen Kammer K1 bis K6 befindlichen Dichtelementes 12b ist aus der Differenz der Werte U1-V1, bzw. U2-V2 usw. ersichtlich. Somit lässt sich der Zustand des Kolbenstangendichtsystems 12 beziehungsweise der Zustand der sich darin befindlichen Dichtelemente 12b überwachen, um beispielsweise eine allenfalls erforderliche Wartung der Dichtelemente 12b frühzeitig zu erkennen, um einerseits einen sicheren Betrieb des Kolbenstangendichtsystems 12 zu gewährleisten, und um andererseits ein Zeitfenster für eine erforderliche Wartung festzulegen.

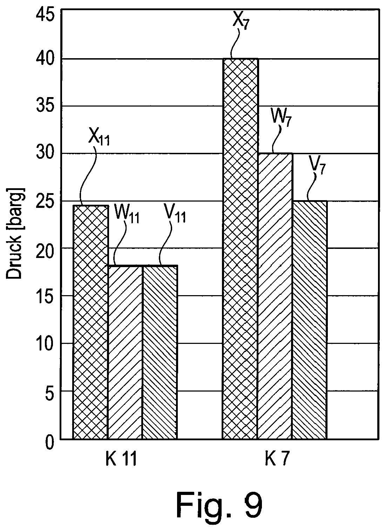

Figur 6 zeigt einen Längsschnitt durch ein weiteres Kolbenstangendichtsystem 12, das eine erste Teilpackung 12x sowie eine zweite Teilpackung 12y umfasst. Die erste Teilpackung 12x umfasst dieselben, wie in Figur 4 dargestellten, Kammerringe 12a mit Kammern K8, K9, K10, K11 sowie in diesen Kammern angeordneten reibende Dichtelemente 12b umfassend je einen Dichtungsring 12e, einen Stützring 12c sowie einen Deckring 12d. Das Kolbenstangendichtsystem 12 gemäss Figur 6 umfasst zudem einen Leckgaskanal 12g sowie nachfolgend zur Austrittsseite A hin angeordnet zwei Kammerringe 12a mit darin angeordneten Sperrringen 12j. Die zweite Teilpackung 12y umfasst sieben in Längsrichtung L nacheinander folgend angeordnete Kammerringe 12a mit Kammern K1, K2, K3, K4, K5, K6 und K7, wobei in jeder dieser Kammern als Dichtelement 12b ein Druckbrecherring 12i angeordnet ist. Ein solcher Druckbrecherring 12i hat die Eigenschaft, dass dieser das Leckgas in Längsrichtung L nicht vollständig abdichtet, dass dieser jedoch die Amplitude der dynamischen Druckkomponente D_{D} reduziert. Im dargestellten Ausführungsbeispiel ist ein Sensor 26 zur Überwachung des Drucks in der Kammer K11 sowie ein Sensor 26a zur Überwachung des Drucks in der Kammer K7 angeordnet. Eine solche Anordnung ist wiederum geeignet den Zustand des Kolbenstangendichtsystems 12 beziehungsweise den Zustand der sich darin befindlichen Dichtelemente 12b zu überwachen. Die Figur 9 zeigt die gemessenen Werte V7, V11 des maximalen Drucks D_{Max} in den Kammern K7 und K11 eines Kolbenstangendichtsystems 12 im Neuzustand, und zeigt mit den Werten W7, W11 die gemessenen Werte des maximalen Drucks D_{Max} in den Kammern K7 und K11 nach beispielsweise 5000 Betriebsstunden, und zeigt mit den Werten X7, X11 die gemessenen Wert des maximalen Drucks D_{Max} in den Kammern K7 und K11 nach beispielsweise 10000 Betriebsstunden. Aus diesen Werten ist ersichtlich, dass das Kolbenstangendichtsystem 12 nach 5000 Betriebsstunden noch zuverlässig funktioniert, wogegen aus dem Wert X7 ersichtlich ist, dass die Druckbrecherringe 12i bzw. die zweite Teilpackung 2y nach 10000 Betriebsstunden keine genügende Dichtwirkung mehr erbringen, wogegen die Dichtwirkung der ersten Teilpackung 12x den Anforderungen noch genügt.

In einer weiteren vorteilhaften Ausgestaltung kann im Kolbenstangendichtsystem 12 gemäss Figur 6 ausgehend von der Eintrittsseite E ein Drucksensor 26a im letzten Kammerring 12a mit darin angeordnetem Druckbrecherring 12i, daher in der Kammer K7, und ein Drucksensor 26 im ersten Kammerring 12a mit darin angeordnetem Reibdichtungsring 12e, daher in der Kammer K8 angeordnet sein, um den Zustand bzw. eine Zustandsänderung des in der Kammer 7 angeordneten Druckbrecherrings 12i bestmöglich zu erfassen.

Bei den in den Figuren 4, 5 und 7 dargestellten Ausführungsbeispielen erfolgt die Überwachung des Drucks in den jeweiligen Kammern K jeweils durch eine Messung des maximal in der jeweiligen Kammer K anliegenden Drucks. Anstelle des maximalen auftretenden Drucks kann auch der Druckverlauf in Funktion des Kurbelwellenwinkels gemessen werden. Figur 8 zeigt einen derartigen Druckverlauf Dv in Funktion des Kurbelwellenwinkels. Aus dem Anstieg während der ansteigenden Flanke, dem maximalen Wert, dem Kurbelwellenwinkel, bei welchem der maximale Wert erreicht wird, oder dem Abstieg während der absteigenden Flanke können ebenfalls Aussagen zum Zustand der Dichtelemente 12b abgeleitet werden.

Es kann sich als vorteilhaft erweisen in dem Kolbenstangendichtsystem 12 zumindest an einer Stelle zusätzlich eine Temperatur T gemessen wird, insbesondere die Temperatur der Kolbenstange 16, beispielsweise mit einem Infrarotsensor. Ein intakter, funktionsfähiger Reibring hat zur Folge, dass sich die Kolbenstange 16 auf Grund der auftretenden Reibung erwärmt. Die Erfassung der Temperatur an einer Stelle im Kolbenstangendichtsystem 12, insbesondere der Kolbenstange 16, ergibt einen zusätzlichen Hinweis auf den Zustand eines Dichtelementes 12b. Zudem kann auch ein gebrochenes Dichtelement 12b und/oder ein elastisch-plastisch deformiertes Dichtelement 12 zu einer Erwärmung der Kolbenstange 16 führen.

## Patentansprüche

1. Verfahren zur Zustandsüberwachung eines Kolbenstangendichtsystems (12) eines Kolbenkompressors, wobei das Kolbenstangendichtsystem (12) zumindest zwei in einer Längsrichtung (L) nacheinander folgend angeordnete Kammerringe (12a) mit zumindest je einem darin angeordneten Dichtelement (12b) umfasst, wobei eine durch die Dichtelemente (12b) sowie die Kammerringe (12a) verlaufende Kolbenstange (16) in Längsrichtung (L) hin und her bewegt und durch die Dichtelemente (12b) abgedichtet wird, wobei das Kolbenstangendichtsystem (12) eine Eintrittsseite (E) und eine Austrittsseite (A) aufweist, zwischen welchen ein Differenzdruck auftritt, wobei der auftretende Differenzdruck eine statische Druckkomponente (Ds) und eine dynamische Druckkomponente (D_{D}) aufweist, und wobei sich ein Leckgas in den Kammerringen (12a) befindet, **dadurch gekennzeichnet, dass** in dem Kolbenstangendichtsystem (12) zumindest die dynamische Druckkomponente (D_{D}) des Leckgases gemessen wird, und dass aus einer Veränderung der dynamischen Druckkomponente (D_{D}) in Funktion der Zeit eine Zustandsänderung zumindest eines der Dichtelemente (12b) bestimmt wird.

2. Verfahren nach Anspruch 1, **dadurch gekennzeichnet, dass** das Dichtelement (12b) gasdicht ausgestaltet ist, indem dieses einen Reibdichtungsring (12e) ausbildet, der an der Kolbenstange (16) anliegt, wobei der Reibdichtungsring (12e) durch die zwischen Reibdichtungsring (12e) und Kolbenstange (16) auftretende Reibung verschliessen wird.

3. Verfahren nach Anspruch 1 oder 2, **dadurch gekennzeichnet, dass** das Dichtelement (12b) zumindest einen nicht vollständig dichtenden Druckbrecherring (12i) umfassen.

4. Verfahren nach einem der Ansprüche 2 oder 3, **dadurch gekennzeichnet, dass** die dynamische Druckkomponente (D_{D}) des Leckgases zumindest bei demjenigen Kammerring (12a) gemessen wird, welcher in Längsrichtung (L) am weiteste entfernt von der Eintrittsseite (E) angeordnet ist.

5. Verfahren nach einem der Ansprüche 3 oder 4, **dadurch gekennzeichnet, dass** das Kolbenstangendichtsystem (12) ausgehend von der Eintrittsseite (E) in Längsrichtung (L) eine Mehrzahl von Kammerringen (12a) mit darin angeordneten Druckbrecherringen (12i) und nachfolgend eine Mehrzahl von Kammerringen (12a) mit darin angeordneten Reibdichtungsringen (12e) umfasst, und dass die dynamische Druckkomponente (D_{D}) des Leckgases im letzten Kammerring (12a) mit darin angeordnetem Druckbrecherring (12i) oder im ersten Kammerring (12a) mit darin angeordnetem Reibdichtungsring (12e) gemessen wird.

6. Verfahren nach Anspruch 4 oder 5, **dadurch gekennzeichnet, dass** die dynamische Druckkomponente (D_{D}) des Leckgases in einer Mehrzahl von Kammerringen (12a) gemessen wird, und dass der Zustand des sich im jeweiligen Kammerring (12a) befindlichen Dichtelementes (12b) anhand der in den einzelnen Kammerringen (12a) gemessenen maximalen Amplitude (Dmax) bestimmt wird.

7. Verfahren nach Anspruch 6, **dadurch gekennzeichnet, dass** eine maximalen Amplitude (Dmaxl, Dmax2, Dmax3) der im jeweiligen Kammerring (12a) anliegenden dynamischen Druckkomponenten (Dd) mit zunehmender Betriebsdauer des Kolbenstangendichtsystems (12) von der Eintrittsseite (E) zur Austrittsseite (A) hin grösser wird, und dass aus der Differenz der maximalen Amplitude (Dmaxl, Dmax2, Dmax3) zweiter benachbarter Kammeringe (12) der Zustand der sich in diesen Kammerringen (12a) befindlichen Dichtelemente (12b) bestimmt wird.

8. Verfahren nach einem der vorhergehenden Ansprüche, **dadurch gekennzeichnet, dass** eine Veränderung der dynamischen Druckkomponente (D_{D}) während einer Zeitdauer von zumindest 2000 Stunden und vorzugsweise während zumindest 8000 Stunden überwacht wird.

9. Verfahren nach einem der vorhergehenden Ansprüche, **dadurch gekennzeichnet, dass** in dem Kolbenstangendichtsystem (12) zumindest an einer Stelle eine Temperatur (T) gemessen wird, insbesondere die Temperatur der Kolbenstange (16).

10. Überwachungssystem zur Zustandsüberwachung eines Kolbenstangendichtsystems (12) eines Kolbenkompressors, wobei das Kolbenstangendichtsystem (12) zumindest zwei in einer Längsrichtung (L) nacheinander folgend angeordnete Kammerring (12a) mit zumindest je einem darin angeordneten Dichtelement (12b) umfasst, wobei eine in Längsrichtung (L) hin und her bewegliche Kolbenstange (16) durch die Dichtelemente (12b) sowie die Kammerringe (12a) verläuft, wobei die Kolbenstange (16) mit einem Kolben verbunden ist, wobei das Kolbenstangendichtsystem (12) eine Eintrittsseite (E) und eine Austrittsseite (A) aufweist, **dadurch gekennzeichnet, dass** bei zumindest einer der Kammerringe (12a) ein Drucksensor (26, 26a) angeordnet ist zum Messen zumindest der dynamischen Druckkomponente (D_{D}) eines sich in den Kammerringen (12a) befindlichen Leckgases, und dass eine Speicher- und Auswertevorrichtung (22) eine Vielzahl von gemessenen dynamischen Druckkomponenten (D_{D}) speichert, und dass die Auswertevorrichtung (22) einer Veränderung der dynamischen Druckkomponente (D_{D}) in Funktion der Zeit überwacht, und daraus eine Zustandsänderung zumindest eines der Dichtelemente (12b) ableitet.

11. Überwachungssystem nach Anspruch 11, **dadurch gekennzeichnet, dass** die Dichtelemente (12b) als an der Kolbenstange (16) anliegende Reibungsringe ausgestaltet sind, und dass zumindest bei der am nächsten zur Austrittsseite (A) hin angeordneten Kammerring (12a) ein Drucksensor (26) angeordnet ist zum Messen zumindest der dynamischen Druckkomponente (D_{D}) eines sich in den Kammerring (12a) befindlichen Leckgases.

12. Überwachungssystem nach einem der Ansprüche 11 oder 12, **dadurch gekennzeichnet, dass** in Verlaufsrichtung (L) der Kolbenstange (16), ausgehend von der Eintrittsseite (E), zuerst als Druckbrecherringe (2i) ausgestaltete Dichtelemente (12b) angeordnet ist, und dass nachfolgend zur Austrittsseite (A) hin als Reibungsringe ausgestaltete Dichtelemente (12b) angeordnet sind, und dass in Längsrichtung (L) zumindest ein Drucksensor (26) zwischen den Druckbrecherringen (12i) und den als Reibungsringen ausgestalteten Dichtelementen (12b) angeordnet ist.

13. Kolbenkompressor betrieben mit einem Verfahren nach einem der Ansprüche 1 bis 10.
